(19) Europäisches Patentamt
European Patent Office
Office européen des brevets

(11) Veröffentlichungsnummer: **0 023 523**
**A1**

(12) # EUROPÄISCHE PATENTANMELDUNG

(21) Anmeldenummer: **79103206.3**

(22) Anmeldetag: **29.08.79**

(51) Int. Cl.³: **B 01 D 53/34,** C 01 B 17/60

(30) Priorität: **29.08.78 JP 105393/78**

(43) Veröffentlichungstag der Anmeldung: **11.02.81**
**Patentblatt 81/6**

(84) Benannte Vertragsstaaten: **BE DE FR GB NL**

(71) Anmelder: **FUJI ELECTRIC CO. LTD., 1-1, Tanabeshinden, Kawasaki-ku, Kawasaki 210 (JP)**

(72) Erfinder: **Kochiwa, Shinichi, Dipl.-Ing., 704 Akiya Yokosuka-shi, Kanagawa (JP)**
Erfinder: **Kunihara, Kenji, Dipl.-Ing., 3-7-4 Iwato Yokosuka-shi, Kanagawa (JP)**
Erfinder: **Hirose, Yoshikazu, Dipl.-Ing.u.Phys., 10-80 Nagai-cho Yokosuka-shi, Kanagawa (JP)**

(74) Vertreter: **Mehl, Ernst, Dipl.-Ing. et al, Postfach 22 01 76, D-8000 München 22 (DE)**

(54) **Verfahren zur Umwandlung von in einem Gasgemisch enthaltenem Schwefelsäureanhydrid in Schwefeldioxid.**

(57) Verfahren zur Umwandlung von in Gasgemischen, insbesondere Industrieabgasen und Auspuffgasen, enthaltenem $SO_3$ in $SO_2$, indem das Gasgemisch mit einer Strömungsgeschwindigkeit in der Größenordnung von 1 l/min (0°C) durch eine Reaktionskammer (2) geführt wird, die auf eine Temperatur zwischen 320 und 500°C aufgeheiztes, im wesentlichen aus Kohlenstoff bestehendes Material enthält. Kohlenstoff kann in der Form von Aktivkohle, Graphit, Ruß, mit oder ohne Zusatz von Bindemitteln und/oder katalytisch wirkenden Metallen eingesetzt werden. Die $SO_3/SO_2$-Umwandlung erfolgt selektiv mit einem Wirkungsgrad von nahezu 100%.

Das Verfahren findet bevorzugt Anwendung bei gasanalytischen Untersuchungen, um das mit Feuchtigkeit korrodierende Schwefelsäure bildende $SO_3$ aus dem Probengas zu entfernen, um den $SO_x$-Gehalt oder den $SO_3$-Gehalt des Gasgemisches zu bestimmen.

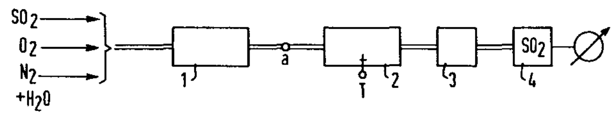


EP 0 023 523 A1

Fuji Electric Co., Ltd.
Kawasaki (Japan)

Unser Zeichen
VPA 78 P 8565 EUR

Verfahren zur Umwandlung von in einem Gasgemisch enthaltenem $SO_3$ in $SO_2$

Die Erfindung bezieht sich auf ein Verfahren zur Umwandlung von in einem Gasgemisch enthaltenem $SO_3$ in $SO_2$ und Anwendungen des Verfahrens zu gasanalytischen Zwecken.

Viele Abgase, beispielsweise Schornsteinabgase und Auspuffgase von Kraftfahrzeugen, enthalten giftige Komponenten, wie Schwefeloxyde ($SO_x$) und Stickoxyde ($NO_x$). Um den Forderungen der Gesetze gegen Umweltverschmutzung nachzukommen, ist es notwendig, die giftigen oder schädlichen Komponenten in den Abgasen meßtechnisch zu erfassen.

Enthält das Gasgemisch $SO_3$, wie es bei Heizungsabgasen oder Auspuffgasen meistens der Fall ist, so entsteht in Gegenwart von Feuchtigkeit Schwefelsäure $H_2SO_4$ in Form eines feinen Nebels. Schwefelsäure hat einen hohen Taupunkt und kann in erheblichem Maße korrosive Effekte in den Leitungen zu den Meßgeräten und in diesen hervorrufen sowie durch Kontamination des Sensors dessen Empfindlichkeit herabsetzen.
Es wird deshalb gefordert, den $SO_3$-Anteil in den der Gasanalyse zu unterwerfenden Gasgemischen zu entfernen bzw. in $SO_2$ umzuwandeln.

Bisher wurden zu diesem Zwecke Filter verwendet, die aus Glasfaser oder adsorbierenden Stoffen bestanden, um die $SO_3$-Anteile oder die Schwefelsäurenebel aus dem Gasgemisch zu entfernen. Dies gelingt jedoch nicht vollständig oder ist mit derart großen Druckverlusten verbunden, daß eine Anwendung in der Praxis bei kontinuierlichen Messungen kaum möglich ist.

Der Erfindung liegt deswegen die Aufgabe zugrunde, ein Verfahren anzugeben, um $SO_3$-Gasgemische, insbesondere in Abgasen selektiv und mit hohem Wirkungsgrad in $SO_2$ umzuwandeln, so daß das Gasgemisch ohne schädliche Wirkungen auf die Meßgeräte analysiert werden kann.

Eine Lösung dieser Aufgabe wird erfindungsgemäß darin gesehen, daß das $SO_3$-haltige Gasgemisch mit einem im wesentlichen aus Kohlenstoff bestehenden Material bei einer Temperatur zwischen $320^\circ$ und $500^\circ$ C in Kontakt gebracht wird.

In diesem Temperaturbereich wird der in dem Gasgemisch, insbesondere in den Abgasen, enthaltene $SO_3$-Anteil selektiv und mit hohem Wirkungsgrad durch eine reduktive Reaktion in $SO_2$ umgewandelt.
Das nach diesem Verfahren behandelte Gasgemisch kann dann mittels bekannter Analysenmethoden, beispielsweise durch nichtdispersive IR-Gasanalyse, auf seine verschiedenen Komponenten, insbesondere auf $SO_2$, untersucht werden. Es ist auch möglich, aus dem $SO_2$-Gehalt des Gasgemisches

nach der Reduktion den $SO_3$-Gehalt des ursprünglichen Gasgemisches zu ermitteln.

Der Kohlenstoff des Reaktionsmaterials kann in Form von Aktivkohle, vorzugsweise granuliert, von Graphit oder Ruß eingesetzt werden. Zur Erhöhung der mechanischen Festigkeit können anorganische Bindemittel, z. B. Zement, zugefügt werden. Es ist ebenfalls möglich, ein katalytisch aktivierendes Metall wie Nickel oder Eisen dem kohlenstoffhaltigen Material zuzusetzen, um die reduzierende Wirkung bei der Umwandlung von $SO_3$ in $SO_2$ zu verbessern.

Zur Ermittlung der optimalen Betriebsbedingungen für das erfindungsgemäße Verfahren dient die in Figur 1 dargestellte Versuchsanordnung.

Aus den Gasen Schwefeldioxyd $SO_2$, Sauerstoff $O_2$ und Stickstoff $N_2$ wird ein Gasgemisch einstellbarer Zusammensetzung hergestellt und einer Vorstufe 1 zugeführt, die einen bei etwa 650° C betriebenen Platin-Tonerde-Katalysator zur katalytischen Oxydation von $SO_2$ zu $SO_3$ enthält.
Das aus der Vorstufe 1 austretende Gasgemisch habe dann folgende Zusammensetzung: 100 ppm $SO_2$, 100 ppm $SO_3$, 5 % $O_2$, 2 % Feuchtigkeit, der Rest $N_2$.
Dieses $SO_3$-haltige Gasgemisch wird mit einer Durchflußrate von 1 l/min, bezogen auf 0° C, über den Eingang a durch eine Reaktionskammer 2 geführt, in welcher sich das im wesentlichen aus Kohlenstoff bestehende Material befindet, das mittels einer Heizeinrichtung auf 200 bis 600° C erhitzt ist.
In der Reaktionskammer 2 findet eine Reduktion des in dem zugeführten Gasgemisch enthaltenen $SO_3$ zu $SO_2$ statt, gemäß der Beziehung

$$SO_3 + C \rightarrow SO_2 + CO_x \ldots (x = 1 \text{ oder } 2) \qquad (1)$$

Das die Reaktionskammer 2 verlassende Gasgemisch wird über ein Filter 3 einem Meßgerät 4, beispielsweise einem Infrarot-Gasanalysator, zugeführt zur quantitativen Messung des $SO_2$-Gehalts der Gasprobe.
Der Wirkungsgrad der Umwandlung von $SO_3$ zu $SO_2$ ist von der Temperatur des kohlenstoffhaltigen Materials abhängig. In der Figur 2 ist diese Abhängigkeit für verschiedene kohlenstoffhaltige Materialien dargestellt, die mit Hilfe der obigen Versuchsanordnung gewonnen wurden. Auf der Abszisse ist die Betriebstemperatur T des kohlenstoffhaltigen Materials aufgetragen, auf der Ordinate der Umwandlungswirkungsgrad $SO_3/SO_2$, der sich aus der Differenz der $SO_2$-Konzentrationen des Gasgemisches am Ausgang und am Eingang der Reaktionskammer, bezogen auf den $SO_3$-Gehalt am Eingang der Reaktionskammer, berechnet.
In dem Diagramm der Figur 2 gilt die Kurve

A für Aktivkohle,
B für Ruß,
C für Graphit,
D für Graphit und Eisen in einem atomaren Mischungsverhältnis von 5000 : 1

In Figur 3 ist in einem Diagramm der Gehalt des Gasgemisches an Kohlenoxyden $CO_x$ nach Verlassen der Reaktionskammer bei verschiedenen Temperaturen T des kohlenstoffhaltigen Materials dargestellt, die Bezeichnungen A, B, C, D der Meßkurven gelten entsprechend.

Aus dem Diagramm der Figur 2 ist zu erkennen, daß mit Aktivkohle im Temperaturbereich von 350 bis etwa 400° C ein Umwandlungs-Wirkungsgrad von nahezu 100 % zu erzielen ist. Wird die Betriebstemperatur unter 320° C abgesenkt, insbesondere unter 300° C, so werden $SO_2$ und $SO_3$ teilweise an der Aktivkohle adsorbiert, wodurch sich der Wirkungsgrad der Umwandlung stark vermindert.

Wird andererseits die Temperatur über 400° C erhöht, tritt eine Sekundärreaktion

$$C + O_2 \rightarrow CO_x \ (x = 1 \text{ oder } 2) \qquad (2)$$

auf, der Kohlenstoff im kohlenstoffhaltigen Material der Reaktionskammer 2 wird erheblich schneller verbraucht. Diese Sekundärreaktion läßt sich in dem Diagramm der Figur 3 aus dem steilen Anstieg des $CO_x$-Gehalts des Gasgemisches ab bestimmten Temperaturen erkennen. Für Aktivkohle beginnt der Anstieg bereits bei Temperaturen über 350° C (Kurve A).

Graphit, welches von den genannten Materialien am schwersten brennbar ist, muß auf etwa 450° C oder mehr aufgeheizt werden, um einen guten Umwandlungs-Wirkungsgrad $SO_3/SO_2$ zu erzielen, siehe Kurve C in Figur 2. Bei einer Betriebstemperatur von über 500° C tritt jedoch wieder die Sekundärreaktion ein, welche zu einer Verschlechterung des Wirkungsgrades führt, siehe Kurve C in Figur 3.

Für die anderen genannten Materialien gilt das Gesagte entsprechend, siehe Kurven B und D in Figuren 2 und 3.

Aus den Diagrammen ist somit zu erkennen, daß der Bereich des höchsten Umwandlungs-Wirkungsgrads bei einer Betriebstemperatur des kohlenstoffhaltigen Materials zwischen 320 und 500° C liegt.

Im praktischen Betrieb entfällt die Vorstufe 1 der Versuchsanordnung nach Figur 1, das zu untersuchende $SO_3$-haltige Gasgemisch, beispielsweise Auspuffgas von Kraftfahrzeugmotoren, wird direkt dem Eingang a der Reaktionskammer 2 zugeführt, die Wahl des kohlenstoffhaltigen Materials und seiner Betriebstemperatur erfolgt entsprechend der vorgesehenen Anwendung.

Für die bevorzugte Anwendung des Verfahrens in gasanalytischen Untersuchungen seien drei Beispiele angeführt.

Beispiel 1: Ein Gasgemisch, beispielsweise ein Auspuffgas, setzt sich aus $NO_x$, $SO_3$, $SO_2$, $O_2$ und $N_2$ zusammen. Um den Anteil an Stickoxyden in dem Gasgemisch zu bestimmen, ohne die dazu geeignete Meßeinrichtung der Gefahr von korrosiven Effekten oder Empfindlichkeitseinbußen durch Schwefelsäurenebel auszusetzen, wird das Gasgemisch vor der Messung mit einer Durchflußgeschwindigkeit von 1 l/min durch eine Reaktorkammer geleitet, die auf 350° C aufgeheizte Aktivkohle enthält. Dabei wird mit einem Wirkungsgrad von mindestens annähernd 100 % der Gehalt an $SO_3$ selektiv in $SO_2$ umgewandelt, so daß das die Reaktionskammer verlassende Gasgemisch nur noch $NO_x$, $SO_2$, $O_2$ und $N_2$ enthält.

Beispiel 2: Der $SO_x$-Gehalt eines Auspuffgases, welches u. a. $SO_3$, $SO_2$, $O_2$ und $N_2$ enthält, soll bestimmt werden. Das Gasgemisch wird durch die Reaktionskammer geleitet, die mit Kohlenstoff in der Form von Aktivkohle gefüllt und auf 350° C erhitzt ist.
Der $SO_3$-Gehalt des Auspuffgases wird nahezu 100%-ig und selektiv in $SO_2$ umgewandelt, so daß das die Reaktionskammer verlassende Gasgemisch nur noch $SO_2$, $O_2$ und $N_2$ enthält.
In einem Gasanalysator wird der Gehalt des Gasgemisches an $SO_2$ gemessen, der dann dem Gesamtgehalt des ursprünglichen Gases an Schwefeloxyden $SO_x$, d. h. $SO_2 + SO_3$, entspricht. Auch hier werden die aus dem Auftreten von Schwefelsäurenebeln entstehenden Schwierigkeiten vermieden.

Beispiel 3: In einem Gasgemisch, beispielsweise einem Auspuffgas, das, wie bereits erwähnt, $SO_3$, $SO_2$, $O_2$ und $N_2$ enthält, soll der Gehalt an $SO_3$ bestimmt werden. Dazu wird ein erster Teilstrom des Gasgemisches durch die

Reaktionskammer mit dem kohlenstoffhaltigen Material geleitet und anschließend in einem Gasanalysegerät sein $SO_2$-Gehalt gemessen.
Ein zweiter Teilstrom wird über einen Druckreduzierer zum Angleich der Strömungsgeschwindigkeit an die durch die Reaktionskammer direkt einem weiteren Gasanalysegerät zugeführt und dort auf seinen Gehalt an $SO_2$ untersucht. Aus den Meßsignalen beider Gasanalysegeräte wird durch Differenzbildung der Gehalt an $SO_3$ im ursprünglichen Gasgemisch bestimmt.

Patentansprüche

1. Verfahren zur Umwandlung von in einem Gasgemisch enthaltenem $SO_3$ in $SO_2$, dadurch gekennzeichnet, daß das Gasgemisch mit einem im wesentlichen aus Kohlenstoff bestehenden Material bei einer Temperatur zwischen 320 und 500° C in Kontakt gebracht wird.

2. Verfahren nach Anspruch 1, dadurch gekennzeichnet, daß Kohlenstoff in Form von Aktivkohle oder Graphit oder Ruß verwendet wird.

3. Verfahren nach Anspruch 2, dadurch gekennzeichnet, daß das im wesentlichen aus Kohlenstoff bestehende Material Metall, vorzugsweise Nickel oder Eisen, in einem atomaren Verhältnis von 5 000 : 1 enthält.

4. Anwendung des Verfahrens nach Anspruch 1 zur Entfernung von $SO_3$ aus gasanalytisch zu untersuchenden Gasgemischen, welche neben Stickoxyden $NO_x$ auch $SO_3$ enthalten.

5. Anwendung des Verfahrens nach Anspruch 1 zur Bestimmung des Gehalts an Schwefeloxyden $SO_x$ in einem Gasgemisch durch Umwandlung der Schwefeloxyde in $SO_2$ und Messung des $SO_2$-Gehalts.

6. Anwendung des Verfahrens nach Anspruch 1 bei der Bestimmung des $SO_3$-Gehalts eines Gasgemisches, welches neben $SO_2$ auch $SO_3$ enthält, dadurch gekennzeichnet, daß eine Teilmenge des Gasgemischs der $SO_3/SO_2$-Umwandlung unterworfen und deren $SO_2$-Gehalt bestimmt wird und daß eine zweite Teilmenge des Gasgemisches unverändert auf $SO_2$ analysiert wird

und daß aus der Differenz der gemessenen $SO_2$-Gehalte der beiden Teilmengen der $SO_3$-Gehalt des Gasgemisches bestimmt wird.

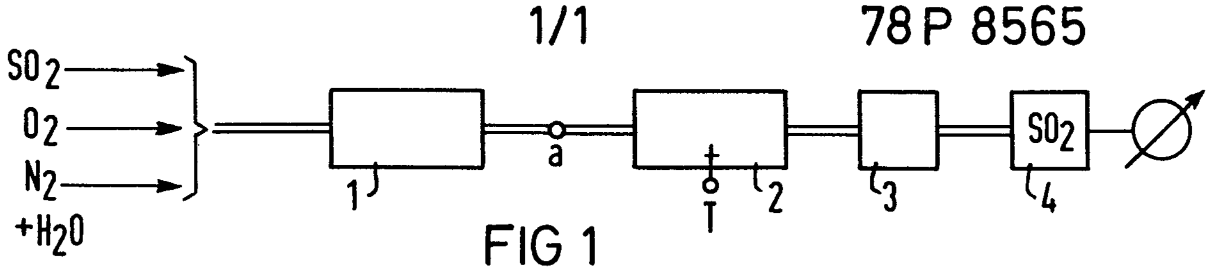


FIG 1

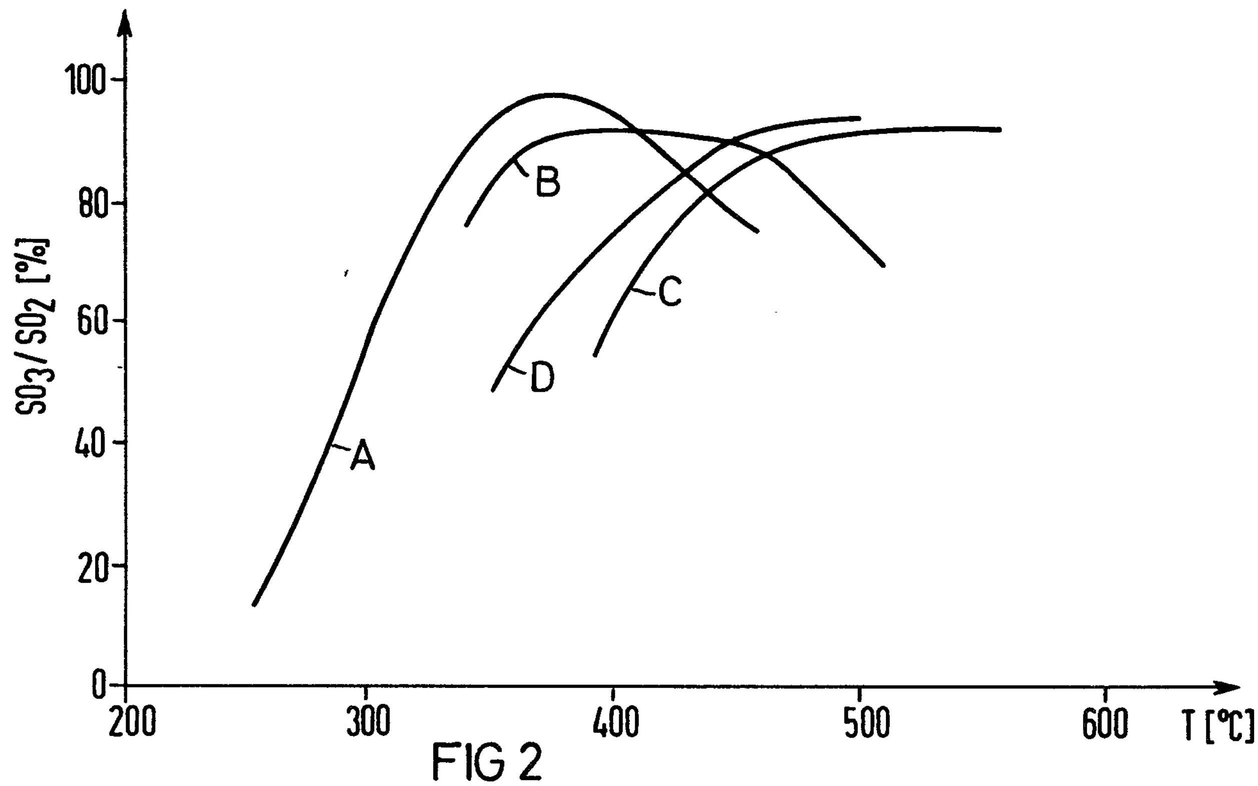


FIG 2

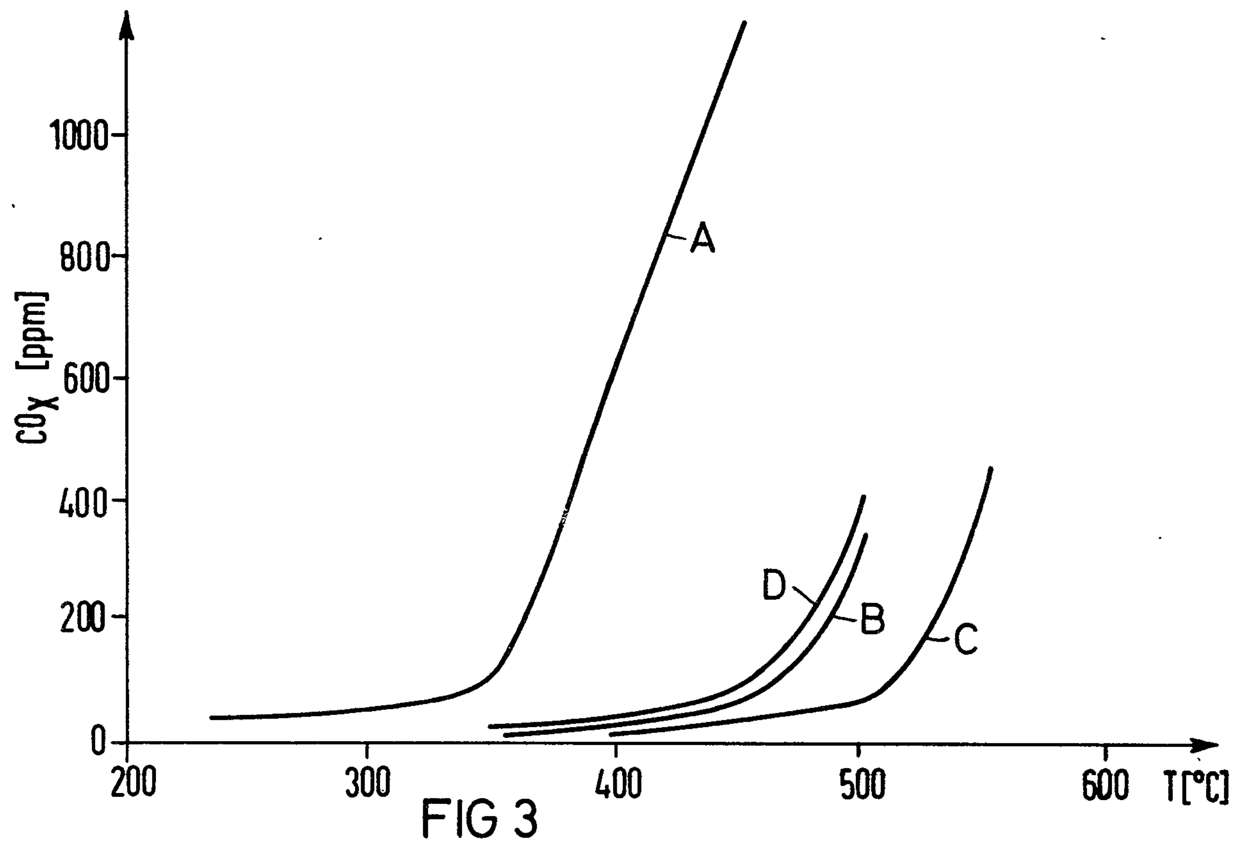


FIG 3

Europäisches Patentamt

# EUROPÄISCHER RECHERCHENBERICHT

0023523 Nummer der Anmeldung

EP 79 103 206.3

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - B - 1 262 233 (REINLUFT)<br>* Spalte 2, Zeilen 42 bis 50, Spalte 3, Zeilen 4 bis 10, Spalte 5, Zeile 4 *<br>-- | 1-3 | B 01 D 53/34<br>C 01 B 17/60 |
| | CHEMIE - INGENIEUR - TECHNIK, Band 49, Nr. 5, 1977<br>Weinheim<br>* Seite A 226, rechte Spalte *<br>-- | 1,2 | |
| | CHEMIE - INGENIEUR - TECHNIK, Band 38, Nr. 7, 1966<br>Weinheim<br>H. JÜNTGEN "Verfahren zur trockenen Abscheidung von Schwefeldioxid aus Abgasen"<br>Seiten 734 bis 736<br>* Seite 735, Spalte 1, Absatz 2 und Seite 736, Spalte 2, Absatz 1 *<br>-- | 1 | RECHERCHIERTE SACHGEBIETE (Int. Cl.3)<br>B 01 D 53/00<br>B 01 D 53/34<br>C 01 B 17/60 |
| | CHEMIE - INGENIEUR - TECHNIK, Band 45, Nr. 19, 1973<br>Weinheim<br>H. JÜNTGEN et al. "Technische Erprobung von Aktivkoks aus Steinkohle für eine adsorptive Abgasentschwefelung"<br>Seiten 1148 bis 1151<br>* Seite 1148, Spalte 1, Absatz 1 *<br>--<br>./.. | 1 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Berlin | 23-11-1979 | KÜHN |

Europäisches Patentamt

# EUROPÄISCHER RECHERCHENBERICHT



Nummer der Anmeldung
EP 79 103 206.3
- Seite 2 -

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | BRENNSTOFF - WÄRME - KRAFT, Band 23, Nr. 3, 1971<br>M. KRUEL "Grundlagen eines Abgasentschwefelungsverfahrens mit "trockener" Verfahrensweise"<br>Seiten 91 bis 97<br>* Seite 94, Spalte 2, Absätze 5 bis 7 *<br>-- | 3 | |
| A | DE - B - 1 181 682 (REINLUFT)<br>* vollständiges Dokument *<br>-- | | RECHERCHIERTE SACHGEBIETE (Int. Cl.3) |
| A | DE - B - 1 255 227 (KARWAT)<br>* vollständiges Dokument *<br>-- | | |
| A | US - A - 2 977 325 (REINLUFT)<br>* vollständiges Dokument *<br>---- | | |